**Europäisches Patentamt**

**European Patent Office**

**Office européen des brevets**

(19)

(11) Numéro de publication : **0 377 571 B1**

(12)

# FASCICULE DE BREVET EUROPEEN

(45) Date de publication du fascicule du brevet :
**11.09.91 Bulletin 91/37**

(51) Int. Cl.$^5$ : **G01H 9/00, A61B 8/00**

(21) Numéro de dépôt : **88905900.2**

(22) Date de dépôt : **01.07.88**

(86) Numéro de dépôt international :
**PCT/FR88/00356**

(87) Numéro de publication internationale :
**WO 89/00278 12.01.89 Gazette 89/02**

(54) **PROCEDE ET SYSTEME D'IMAGERIE PAR TRANSILLUMINATION A MARQUAGE EN FREQUENCE DES PHOTONS.**

(30) Priorité : **03.07.87 FR 8709461**

(43) Date de publication de la demande :
**18.07.90 Bulletin 90/29**

(45) Mention de la délivrance du brevet :
**11.09.91 Bulletin 91/37**

(84) Etats contractants désignés :
**DE GB IT NL**

(56) Documents cités :
**GB-A- 2 000 290**
**US-A- 3 636 248**
**US-A- 3 831 135**
**IEEE Transactions on computers,vol.c-24,no.4,avril 1975,(New-Jork,US)G.Wade et al.: "New experiments and analysis in Bragg-diffraction imaging",voirpages 395-396 paragraphe 1,"Introduction"**

(73) Titulaire : **GENERAL ELECTRIC CGR S.A. 100, rue Camille-Desmoulins F-92130 Issy les Moulineaux (FR)**

(72) Inventeur : **DOLFI, Daniel 19, rue Charles-de-Gaulle F-91400 Orsay (FR)**
Inventeur : **MICHERON, François 3, allé de la Gambauderie F-91190 Gif-sur-Yvette (FR)**

(74) Mandataire : **Schmit, Christian Norbert Marie Cabinet Ballot-Schmit 7, rue Le Sueur F-75116 Paris (FR)**

EP 0 377 571 B1

Jouve, 18, rue Saint-Denis, 75001 PARIS

## Description

L'invention concerne un système permettant d'imager un objet noyé dans un milieu diffusant ou une partie interne (par exemple un plan) de cet objet diffusant. Le système est décrit dans son application au domaine de l'imagerie médicale. Il fonctionne aux longueurs d'ondes visibles ou proche de l'infrarouge et concerne donc un procédé de transillumination (ou diaphanoscopie).

Ce qui différencie essentiellement ce système de ceux connus dans la technique réside dans le fait que les photons diffusés pris en compte pour la formation de l'image ont une fréquence associée différente de celles des autres photons. Cette différence est obtenue directement, dans l'organe, par effet Doppler. Le système permet donc une étude tomographique de l'organe.

Le procédé décrit propose une alternative aux systèmes d'imagerie médicale classiques. (Rayonnement X associé au film, échographie, résonance nucléaire magnétique). Il permet la formation d'images en trois dimensions, immédiatement disponibles, par transmission de lumière visible ou proche infrarouge au travers d'un organe vivant. Ce procédé peut également s'appliquer à tout milieu diffusant suffisamment transparent à la lumière.

La transillumination comme moyen de diagnostic a été utilisée pour la première fois en 1929, pour la mise en évidence de tumeurs du sein. On trouvera une description d'un tel système dans l'article "Transillumination as an aid in the diagnosis of breast lesions" de M. CUTLER publié dans Surgery, Gynecology and obstretics de juin 1929. Le dispositif utilisé consistait uniquement en une lampe placée sous le sein de la patiente, le médecin observant directement la lumière diffusée. Tous les dispositifs utilisés par la suite sont des améliorations de ce premier système. L'utilisation de torches plus puissantes, refroidies, de surfaces sensibles dans le proche infrarouge par utilisation de films ou de caméra IR, la formation d'images à deux longueurs d'ondes différentes, associée à un traitement de l'image important, n'ont pas permis d'amélioration spectaculaire. La limitation principale vient de la valeur très importante du coefficient de diffusion dans les tissus biologiques, même aux longueurs d'ondes où l'absorption est la plus faible. De tels dispositifs ne sont utilisés que pour la mammographie et ne permettent la détection, avec beaucoup de sûreté, ni de tumeurs de faibles dimensions inférieures (1 cm), ni de tumeurs profondes même plus importantes.

Le procédé proposé par l'INSERM (U238) du Professeur JARRY et décrit dans la thèse de Doctorat, spécialité Sciences, soutenue par S. DEBRAY le 12 juin 1987 devant l'Université de Paris, Val de Marne et ayant pour titre "Dispositif pour la transillumination Laser des tissus biologiques. Apports de la résolution temporelle et de la Spectrophotométrie", permet de se soustraire à l'influence de la diffusion. L'organe est éclairé par un faisceau laser. Le détecteur, placé en regard du laser, derrière l'organe, est muni d'un collimateur. La sélection de temps de vol ou temps de traversée de l'organe par les photons non déviés ou diffusés permet de ne pas prendre en compte les photons diffusés. En effet pour sélectionner les photons transmis en ligne droite on utilise un laser pulsé. Ce système permet également l'analyse spectroscopie de l'organe (laser à colorant). Le contraste et la perception des détails sont améliorés.

On trouvera la description d'un tel système dans l'article "Etude en simulation du comportement de la lumière dans les tissus biologiques" de MAAREK et JARRY publié dans Innovations Techniques Biologiques et Médicales, volume 7, numéro 3 de 1985.

L'utilisation d'une caméra à balayage de fente possédant 5 picosecondes de résolution et d'une source laser pulsée, a permis de mettre au point un système d'imagerie tomographique tel que cela est décrit dans l'article "Laser pulse tomography using a streak camera" de Y. TAKGUCHI et al publié dans Proceedings Image Detection and Quality de juillet 1986. La tomographie est rendue possible par la prise en compte du signal rétrodiffusé. Cette technique, compte tenu de la faiblesse du signal, sera difficile à transposer aux organes vivants de dimensions importantes.

La faible résolution des systèmes classiques, même lorsqu'ils sont dotés d'un traitement de l'image performant, (procédé Spectrascant, la complexité des systèmes de détection plus performants, nous amènent à proposer un dispositif de transillumination utilisant pour la formation des images, non pas les photons transmis sans être diffusés mais bien les photons diffusés dans la zone à imager. Les photons issus de cette zone sont marqués en fréquence.

Dans le cas de l'utilisation d'un détecteur classique, la très grande sélectivité angulaire de la détection hétérodyne (propriété d'antenne) ainsi que l'excellent rapport signal à bruit qu'elle autorise, permettent d'envisager son application au domaine médical.

Si on remplace le système de détection classique par un ensemble matériau photoréfractif et détecteur solide, on peut disposer, de manière instantanée, de l'image d'un plan interne de l'organe diffusant. On conserve en outre un excellent rapport signal bruit.

L'invention se rapporte, comme décrit dans la demande de brevet GB-A-2000290, à un procédé d'imagerie de corps biologiques par transillumination selon lequel on éclaire par transparence à l'aide d'un premier fais-

EP 0 377 571 B1

ceau un milieu contenant au moins une zone diffusante et qu'on mesure la quantité de lumière diffusée par ladite zone diffusante, dans lequel on transmet, dans le milieu, une onde acoustique d'une première fréquence interférant avec ledit premier faisceau et qu'on détecte la lumière traversant le milieu et ayant sa fréquence déplacée de la valeur de la première fréquence.

Selon la présente invention, pour résoudre les problèmes de rapport signal à bruit inhérent à cette méthode, on soumet ensuite le milieu à une deuxième onde acoustique d'une deuxième fréquence différente de la première fréquence.

L'invention concerne également un système d'imagerie par transillumination comprenant une source laser émettant une faisceau lumineux de source éclairant à l'aide d'un premier faisceau un milieu transparent ou translucide ainsi qu'un détecteur recevant un deuxième faisceau lumineux résultant du premier faisceau après traversée dudit milieu, un premier transducteur acoustique émettant dans le corps une onde acoustique d'une première fréquence déterminée non colinéaire avec le premier faisceau ainsi qu'un dispositif optique de collimation placé sur le trajet du deuxième faisceau et dont le foyer est situé à l'intersection du deuxième faisceau et de l'onde acoustique, des moyens de filtrage en fréquence étant en outre associés au système d'imagerie pour détecter, par le détecteur, la lumière du deuxième faisceau lumineux ayant subi ladite translation de la valeur de la première fréquence, caractérisé en ce qu'il comporte un deuxième transducteur acoustique (TA2) accolé au premier transducteur (TA1) placé du côté opposé au premier faisceau lumineux (F1) par rapport au premier transducteur (TA1) et permettant d'émettre une deuxième onde acoustique d'une deuxième fréquence déterminée (f2) interférant avec le premier faisceau lumineux (F1) mais n'interférant pas avec la première onde acoustique et irradiant l'ensemble du milieu (H) situé du côté opposé au premier faisceau lumineux (F1) par rapport à la première onde acoustique.

Les différents objets et caractéristiques de l'invention apparaîtront plus clairement dans la description qui va suivre faite à titre d'exemple en se reportant aux figures annexées qui représentent :

— la figure 1, un système d'imagerie par transillumination auquel est applicable l'invention ;

— la figure 2, un diagramme explicatif du système de la figure 1 ;

— la figure 3, un exemple de réalisation du système d'imagerie par transillumation à marquage en fréquence des photons selon l'invention ;

— la figure 4, un autre exemple de réalisation du système d'imagerie par transillumination selon l'invention;

— la figure 5, un exemple de réalisation détaillée du système de la figure 4 ;

— les figures 6 et 7, des vues détaillées de systèmes de filtrage fréquentiel par holographie selon l'invention ;

— la figure 8, un exemple de réalisation du système de l'invention comportant un amplificateur optique ;

— la figure 9, un exemple de réalisation du système de l'invention comportant des guides d'ondes de transmission optiques ;

— la figure 10, un exemple de circuits électriques de détection et de traitement des informations détectées par le détecteur ;

— les figures 11 à 19, des courbes illustrant le fonctionnement des circuits de la figure 10 ;

— la figure 20, une variante de réalisation des circuits de la figure 10 ;

— la figure 21, un exemple de réalisation des transducteurs acoustiques du système selon l'invention ;

— la figure 22, un système d'imagerie à exploration selon l'invention ;

— la figure 23, un système de translation par miroirs du faisceau d'imagerie selon l'invention ;

— la figure 24, un système d'exploration pour système d'imagerie à guides optiques applicable au système de la figure 9 ;

— la figure 25, un système d'imagerie à amplification selon l'invention ;

— la figure 26, une vue détaillée du système de la figure 25 ;

— la figure 27, un système d'imagerie optique et acoustique combinées selon l'invention ;

— la figure 28, un système d'imagerie à images rétrodiffusées selon l'invention.

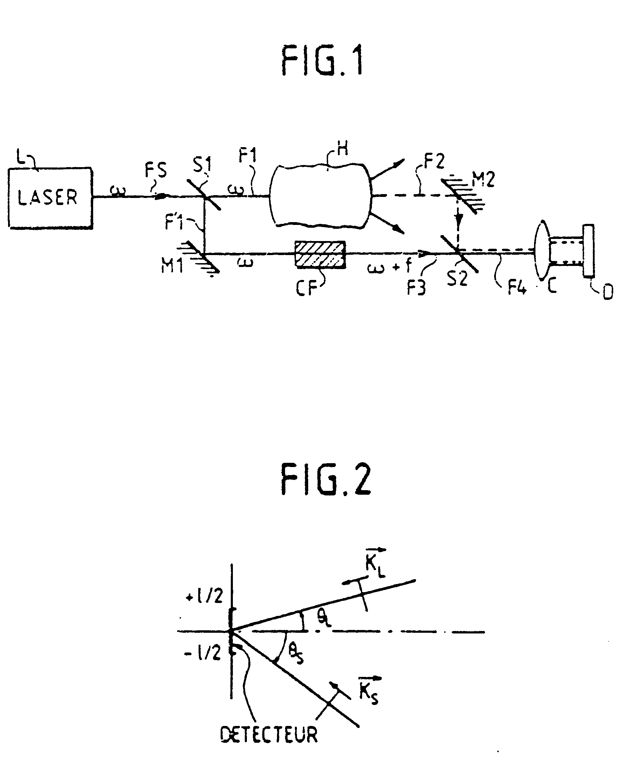

En se reportant à la figure 1, on va tout d'abord décrire un système d'imagerie auquel s'applique l'invention.

Ce système comporte une source L de rayonnement émettant un faisceau FS. Ce faisceau est, par exemple, un faisceau lumineux de fréquence $\omega$. Un séparateur de faisceau S1, tel qu'un miroir semi-réfléchissant, transmet une partie du faisceau FS à un corps H translucide ou transparent. Celui-ci reçoit le faisceau F1 et retransmet tout ou partie de ce faisceau sous la forme d'un faisceau F2. Ce faisceau F2 est réfléchi par un miroir M2 vers un coupleur de faisceau S2. Ce coupleur de faisceau S2 peut être par exemple une lame semi-réfléchissante.

Le séparateur de faisceau S1 réfléchit une partie F'1 du faisceau FS vers un miroir M1. Celui-ci réfléchit le faisceau F'1 vers un changeur de fréquence CF qui fournit en échange un faisceau F3 de fréquence $\omega + f$. Ce faisceau F3 est transmis au coupleur de faisceau S2 qui combine les faisceaux F2 et F3, et fournit un faisceau F4 vers un détecteur D. Une optique C focalise éventuellement la lumière transmise vers le détecteur D.

3

De cette façon, on effectue le mélange sur un détecteur de deux ondes optiques F2 et F3 de fréquences légèrement différentes.

Si on superpose, comme cela est représenté sur la figure 2, sur un détecteur deux ondes optiques, d'amplitudes $\overline{U_S}$ et $\overline{U_L}$, de fréquences légèrement différentes $\omega_S$ et $\omega_L$ telles que $\omega_S - \omega_L$ inférieur à quelques MHz, on obtient, en plus d'une composante continue, un photocourant $I_{SL}$ à la fréquence intermédiaire $\omega_S - \omega_L$ :

$$I_{SL} = \int\int_A \eta \ (x \ y) \ \overline{U_S} \ \overline{U_L}^* \ dA$$

dans laquelle

A : aire du détecteur

$\eta \ (x, y)$ : efficacité quantique non uniforme du détecteur.

Ainsi, pour un détecteur uniforme, dans le cas d'amplificateurs d'ondes planes, on obtient

$$I_{SL} \alpha \, \text{Sin C} \, [\tfrac{1}{2}(K_L \sin \theta_L - K_S \sin \theta_S)\ell]$$

Le courant, à la fréquence intermédiaire, n'a donc de valeur notable que lorsque $K_L$ et $K_S$ sont quasiment parallèles. La première annulation de $I_{SL}$ a lieu pour un écart angulaire de l'ordre de $\Delta\theta \sim \lambda/\ell$ avec $\lambda$ = longueur d'onde utilisée.

$\ell$ = dimensions caractéristiques de la zone de superposition $i_L$ et $i_S$ étant les amplitudes des photocourants délivrés lorsque le détecteur reçoit respectivement $U_L$ et $U_S$, on a, dans le cas de deux ondes planes uniformes et parallèles :

$$I_{SL} \, \alpha \, \sqrt{i_L} \, i_S \, (\cos | \omega H_L - \omega_S | t)$$

Dans un système de détection hétérodyne, les ondes optiques $U_L$ et $U_S$ seront obtenues par séparation d'un faisceau issu d'une source unique. C'est un système acoustooptique (type cellule de Bragg) qui fournit le déplacement en fréquence ($\omega_S - \omega_L$) d'une onde par rapport à l'autre.

Le principe essentiel de fonctionnement du système de l'invention est d'obtenir ce déplacement en fréquence, non pas à l'extérieur, mais directement à l'intérieur de l'organe à imager.

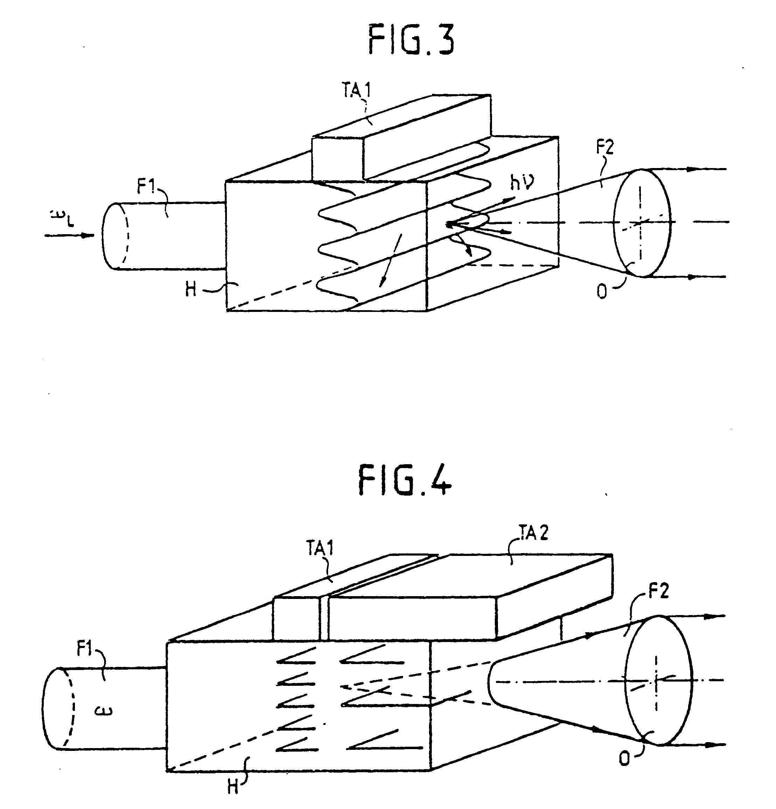

La figure 3 montre comment il est possible de générer une onde acoustique, à l'intérieur d'un milieu diffusant H au moyen d'un transducteur TA1 qui peut être par exemple une sonde acoustique analogue à celles utilisées en échographie (fréquence d'excitation de 1 à 10 MHz).

Un faisceau lumineux F1 de fréquence $\omega_L$ éclaire le corps H.

Les photons diffusés dans la zone délimitée par la sonde acoustique TA1, interagissent avec l'onde acoustique et voient donc, au premier ordre, leur fréquence associée déplacée de $\omega_L$ à $\omega_S$, si la fréquence de l'onde acoustique vaut $f = \omega_S - \omega_L$, cela en raison de l'effet Doppler.

La fraction des photons, diffusés dans la zone de propagation de l'onde acoustique, qui sort du milieu sans subir de nouvelle diffusion entre dans un système optique A. Ce dernier recevant le faisceau lumineux F2 peut alors fournir une onde optique plane à la fréquence $\omega_S$. Cette onde est ensuite mélangée, selon les conditions d'accord décrites plus haut, à une onde plane de fréquence $\omega_L$. Le mélange est également possible avec des ondes non planes, mais de mêmes caractéristiques géométriques.

Une fraction très importante de photons diffusés dans la tranche acoustique est à nouveau diffusée avant de sortir du milieu diffusant H. Le système optique A ; grâce aux propriétés d'antenne de la détection hétérodyne permet d'isoler un petit volume d'organe diffusant et de ne prendre en compte que ce qui est diffusé, par exemple, au point focal objet F du système optique A. Les photons diffusés ultérieurement ne participent donc pas à la formation de l'image. A titre d'exemple le volume d'organe diffusant F aura pour diamètre de 100 micromètres à 1 millimètre.

Selon un autre mode de réalisation selon l'invention représenté en figure 4, on peut se soustraire à l'influence des photons diffusés dans la "tranche acoustique" et diffusés à nouveau avant de sortir du milieu diffusant. Pour cela on utilise deux traducteurs parallèle TA1 et TA2, l'un fonctionnant à la fréquence f, l'autre à f'. Ces transducteurs peuvent être par exemple des sondes d'échographie.

Les photons diffusés sous le transducteur TA1 subissent un déplacement en fréquence de f, ceux diffusés sous le transducteur TA2 un déplacement en fréquence f'. Ainsi seuls diffusés sous le transducteur TA1 posséderont la fréquence $\omega + f$ et fourniront, après mélange avec une onde à $\omega$, un photocourant à la fréquence f. Tous les autres, à conditions qu'ils remplissent les conditions de théorème d'antenne ne fourniront que des photocourants à la fréquence f + nf' ou nf' selon le nombre de diffusions subies. Ces photons sont alors aisément filtrés.

Le marquage en fréquence des photons diffusés pris en compte pour la formation de l'image permet d'isoler un plan fictif dans un milieu diffusant H. Si on forme l'image de ce plan, point par point, il apparaît que par déplacement de la tranche acoustique on parviendra à former une image 3D.

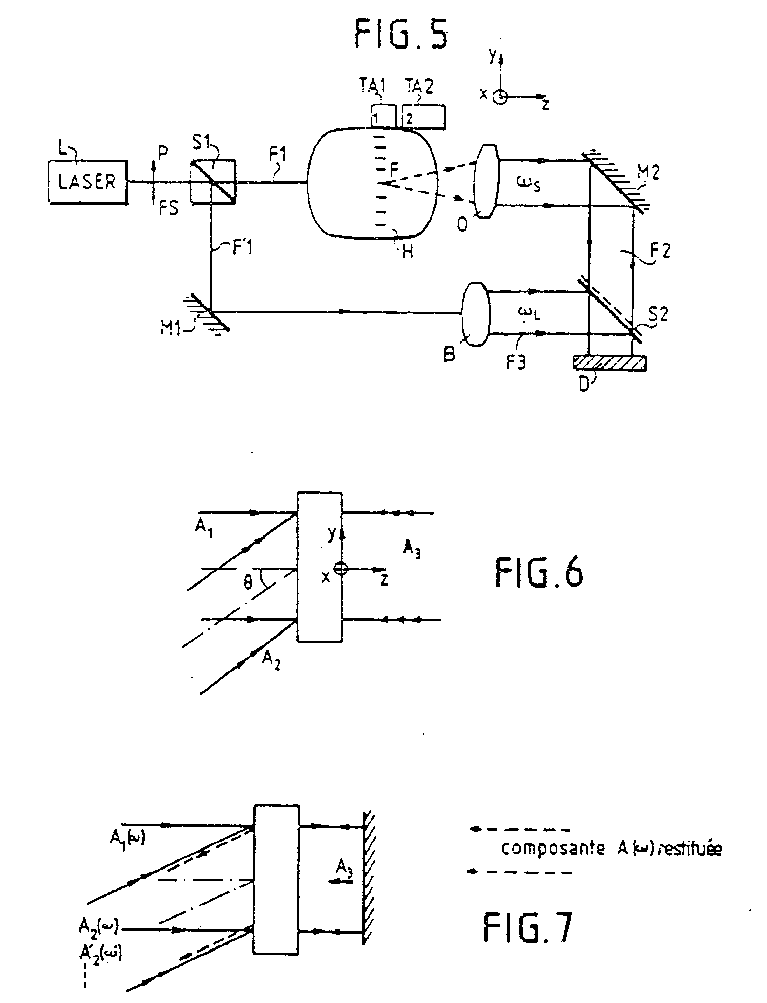

La figure 5, donne le schéma de principe de ce système d'imagerie. Dans la suite de la description, le faisceau à la fréquence optique $\omega_L$ sera appelé l'oscillateur local, celui à $\omega_S$, faisceau signal. Dès que l'oscillateur local est suffisamment intense, la détection hétérodyne présente, entre autres, les avantages suivants :

— détection de flux importants

— rapport signal à bruit très favorable grâce à la très faible bande passante nécessaire

— même puissance équivalente de bruit qu'un détecteur quantique parfait limité par le bruit de photons.

On retrouve sur la figure 5, les mêmes éléments que ceux de la figure 1 :

— la source L

— le séparateur S1

— le corps H

— les miroires M1 et M2

— le coupleur optique S2

— le détecteur D

En supplément, on trouve sur la figure 5, deux optiques de collimation O et B. L'optique de collimation a son point focal objet F situé dans le corps H. On trouve également les transducteurs acoustiques TA1 et TA2 de la figure 4.

Les translations du système optique O selon les axes X et Y permettent la reconstruction point par point d'un plan de PO de coordonnée déterminée selon l'axe Z et situé sous le transducteur TA1. Une translation simultanée des transducteurs TA1 et TA2 et du système optique O selon l'axe Z de $Z_0$ à $Z_1$ permet ensuite la formation d'une image à deux dimensions 2D du plan de coordonnée $Z_1$ selon l'axe Z. Il est à noter, par ailleurs; que la coïncidence de l'oscillateur local et du signal est en permanence assurée sur le détecteur D.

Le système de la figure 5, permet donc d'effectuer une image en trois dimensions du corps H par transillumination à l'aide d'un faisceau F1.

Le filtrage en fréquences peut être réalisé par un système de filtrage fréquentiel par holographie en temps réel tel que représenté en figures 6 et 7.

Ce système décrit dans la suite utilise donc le marquage en fréquence des photons diffusés dans la zone à imager. Le principal avantage de ce système est de former réellement l'image d'un plan fictif interne au milieu diffusant et non simplement de reconstruire une image par une analyse point par point du plan.

Si on éclaire un matériau photoréfractif 1, tel qu'un cristal d'oxyde, (par exemple BSO) de Bismuth et d'Etain, par exemple, avec deux ondes optiques A1 et A2 comme présentées en figure 6 et telles que l'on a :

$$A_1 (x, y) = a_1 (x, y) \exp j (\omega t - kz)$$

$$A_2 (x, y) = a_2 (x, y) \exp j (\omega t - k\theta y - Kz).$$

On modifie sa transmission, initialement uniforme, qui devient :

$$T(x,y) \alpha \ |A_1 {}^{\cdot} A_2|^2$$
$$\alpha \ 1 + \frac{|A_2|^2}{|A_1|^2} + \frac{A_2^{*}}{A_1^{*}} + \frac{A_2}{A_1}.$$

On éclaire simultanément, l'hologramme dynamique qu'on a ainsi obtenu, avec une onde $A_3$, telle que :

$$A_3 = a_1 (x, y) \exp j (\omega t + kz)$$

Cette onde est identique à l'onde $A_1$ et se propage simplement en sens inverse. Après traversée de l'hologramme par l'onde $A_3$, le produit $A_3(x, y) \times T(x, y)$ fournit le terme $\frac{A_2^{*}}{A_1} \cdot A_3$. Ce terme restitue une onde identique à $A_2$, se propageant en sens inverse, c'est-à-dire une onde de la forme $\frac{a_2^2 a_1}{a_1} \cdot \exp j (\omega t + K\theta j + Kz)$

L'onde $A_3 (x, y,)$ est très facilement obtenue, en interposant, sur le trajet de $A_1 (x, y)$ après traversée de l'hologramme, un miroir 2 parallèle au plan d'onde de $A_1$ (x, y, $\omega$) comme cela est représenté en figure 7.

Lorsqu'on éclaire la plaque photosensible avec une onde $A_2$ plane mais polychromatique, $A_2 = A_{2(\omega)} + A'_2(\omega') + ...$, et une onde $A_1(\omega)$ monochromatique, seule la composante $A_{2(\omega)}$ va contribuer à la formation d'un système de franges stables. Les composantes de $A_2$ dont la fréquence diffère de $\omega$ ne donneront, après interférence avec $A_1$, que des systèmes de franges dont la vitesse de défilement est trop grande pour que le matériau puisse en rendre compte. La restitution par $A_3(\omega)$ permet d'isoler la composante $A_{2(\omega)}$. L'hologramme peut donc être considéré comme un filtre fréquentiel.

Cette méthode de filtrage peut être utilisée pour isoler, dans la lumière diffusée par l'organe, la composante à la fréquence $\omega_S$, c'est-à-dire les photons diffusés sous un transducteur acoustique analogue à celui décrit précédemment.

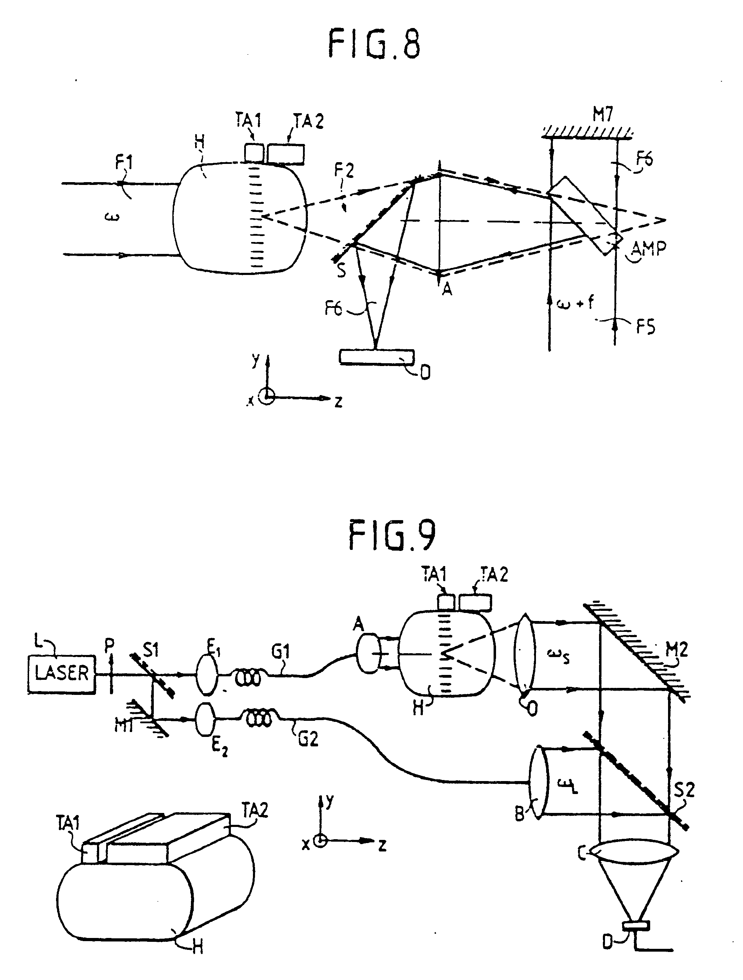

La figure 8, donne un exemple de réalisation d'un tel système, seule la composante de lumière diffuse a$\omega$ + f interfère avec le faisceau pompe sur le matériau AMP permettant de réaliser un hologramme dynamique. Le faisceau issu du miroir M7 restitue ensuite cette composante du faisceau diffusé à $\omega$ + f. Une lame semi-transparente S permet de former, par exemple sur un film photographique D, l'image de la tranche fictive d'organe, située sous le transducteur TA1 vibrant à la fréquence f. Le transducteur TA2 fonctionnant à la fréquence f' permet, comme on l'a vue précédemment, de se soustraire à l'influence des photons diffusés dans la zone à imager et rediffusés ultérieurement. Par simple translation parallèlement à l'axe Z de l'ensemble constitué :

— du dispositif optique A
— de la lame semi-transparente S
— du matériau amplificateur AMP
— du détecteur D

il est possible d'imager différentes tranches successives de l'organe, et par la suite de reconstituer une image en trois dimensions de ce dernier.

Les systèmes de la présente description ont une source qui peut émettre successivement à plusieurs longueurs d'ondes. Cela permet la connaissance spectroscopique du milieu de la formation d'images à différentes longueurs d'ondes. Les deux systèmes forment des images tenant compte, à la fois, des coefficients d'absorption et de diffusion du milieu.

La source doit être suffisamment cohérente temporellement pour permettre le mélange sur le détecteur D. Une source laser convient. Cette source peut être monochromatique, fournir des longueurs d'ondes discrètes ou un spectre continu (laser à colorant à chaque longueur d'onde permet la formation d'une image).

A chaque type de détecteur D utilisé pourra être associé un ou plusieurs type d'éclairage et de balayage de l'organe ou milieu H dont on veut former l'image. Lorsque deux faisceaux de tailles différentes interfèrent sur le détecteur, seule la partie de ce dernier, limitée par le faisceau le plus étroit, génère un signal à la fréquence intermédiaire f. La sélectivité angulaire est limitée par la taille du faisceau le plus étroit.

Le système d'imagerie décrit permet la mesure du flux lumineux diffusé par un petit volume d'organe dont on connaît la position, d'où la possibilité de reconstruction de l'image.

Sur la figure 9, la lumière émise par la source L est polarisée rectilignement par un polariseur P puis séparée en deux voies par un séparateur S1 qui peut être une lame semi-réfléchissante ou un cube séparateur. Ce peut être un système dissymétrique, par exemple de transmission T = 0,9 et de réflexion R = 0,1. On dispose ainsi d'un faisceau plus puissant à l'éclairage et d'un oscillateur n'éblouissant pas le détecteur.

Les systèmes optiques $E_1$ et $E_2$ adaptent la géométrie du faisceau laser à celle de fibres optiques de transmission $G_1$ et $G_2$.

Ces fibres $G_1$ et $G_2$ permettent de relier la source L au système d'éclairage du milieu H et au coupleur optique S2.

Les systèmes optiques A et B sont des systèmes optiques qui s'adaptent à la sortie des fibres $G_1$, $G_2$ et fournissent des faisceaux collimatés. Le faisceau issu de A est de dimensions réduites (diamètre de 1 à 10 mm) de manière à autoriser une densité de puissance d'éclairage assez importante.

Le système optique O permet la collection des photons diffusés sous le transducteur TA1 à la fréquence f. Et la collimation de l'onde ainsi obtenue. Les axes des dispositifs optiques O et A coïncident.

Le mélange de l'onde oscillateur local à la fréquence $\omega_L$ et de l'onde signal à la fréquence $\omega_S$ s'effectue sur un système semi-transparent S2.

Le système optique C permet, après mélange des deux ondes, d'adapter leur taille à celle du détecteur D. La surface génératrice de bruit est réduite au maximum puisqu'elle coïncide avec celle génératrice de signal.

Le détecteur est de type photodiode mais peut être remplacé suivant les applications par un photocathode ou un photomultiplicateur.

$M_1$ et $M_2$ sont des moiroirs ou des prismes à réflexion totale.

Les transducteurs acoustiques TA1 et TA2 sont des transducteurs, par exemple de type, sonde acoustique d'échographie fournissant une onde acoustique quasiment collimatée. Le transducteur TA1 permet d'exciter une tranche d'organe dont l'épaisseur est de l'ordre de 1 mm à 10 mm. Le transducteur TA2, qui permet de se soustraire à l'influence des photons multidiffusés, doit exciter acoustiquement la totalité de l'organe située au delà de TA1.

L'image d'une tranche découpée acoustiquement est alors obtenue par simples translations de l'ensemble d'imagerie (A, O, $M_2$, B, S2, C, D) selon les axes X et Y. Lors de ces translation, la coïncidence entre signal et oscillateur local est constamment assurée.

La sélection des différents plans successifs dont on veut former l'image est assurée par translation selon l'axe Z de l'ensemble constitué par le transducteur TA1, le transducteur TA2 et le système optique O.

Les flux lumineux provenant de chaque tranche sont très différents suivant l'abscisse selon l'axe Z. Ils augmentent lorsque cette abscisse croit d'où une variation nécessaire du gain de l'amplificateur suivant le détecteur.

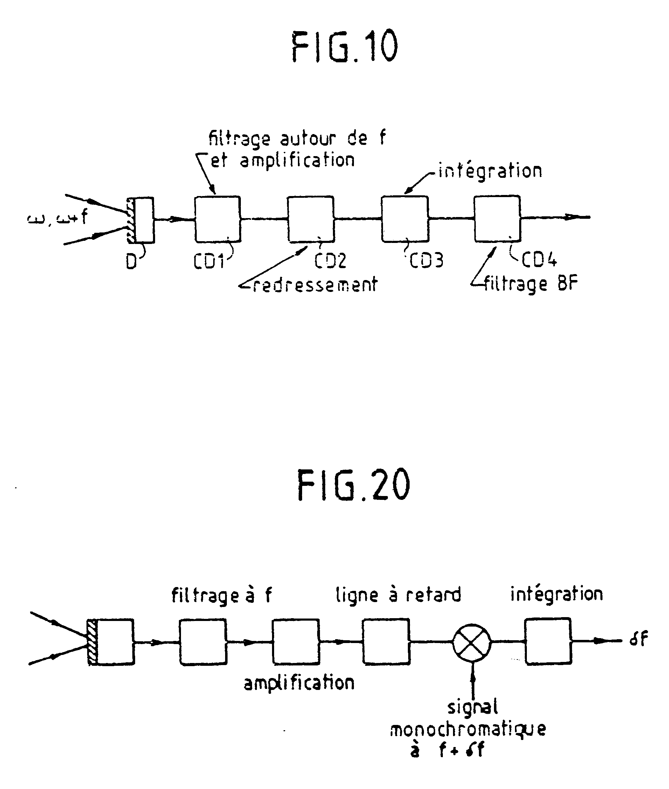

La chaîne de détection est représentée en figure 10.

Elle comporte les différents circuits suivants connectés en série au détecteur D :

— un circuit de filtrage et d'amplification CD1 ;

— un circuit de redressement CD2 ;

— un circuit d'intégration CD3 ;

— un filtre basse fréquence CD4.

La fréquence $\omega_L$ est celle de la source laser et donc du faisceau oscillateur local $\omega_S = \omega_L + f$ la fréquence du faisceau signal.

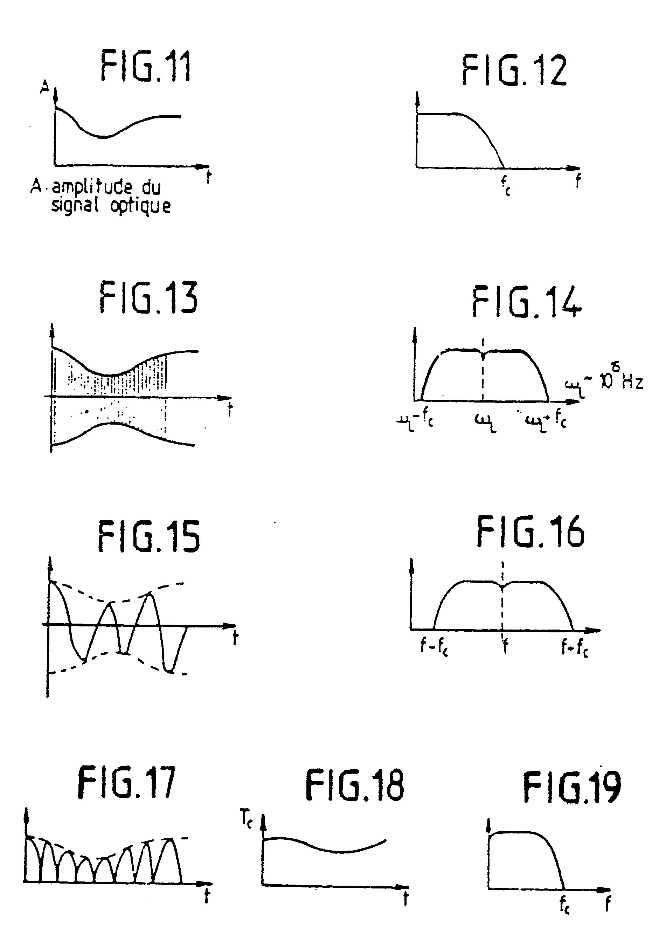

Sur les figures 11 à 19 on trouve l'allure des signaux en différents points du système.

Les figures 11 et 12 représentent, respectivement, l'évolution de l'amplitude du signal optique au cours d'une ligne de balayage, et le spectre basse fréquence de cette évolution.

La fréquence $f_C$ peut être assimilée à une fréquence spatiale. Elle chiffre la résolution transverse du système lors du balayage de l'objet diffusant.

La figure 13 représente l'onde électromagnétique qui constitue la porteuse du signal obtenu au cours d'une ligne de balayage (l'onde électromagnétique à la fréquence $\omega$).

La figure 14 donne le spectre de cette onde. C'est l'onde signal.

Les figures 15 et 16 représentent le signal de fréquence intermédiaire f détecté par le détecteur D et le spectre de fréquence associé. Ce signal est obtenu après mélange du faisceau signal et de l'oscillateur local (sortie de CD1).

Les figures 17 à 18 représentent le signal redressé puis filtré par les circuits de la chaîne de détection (respectivement en sortie de CD2 et de CD3).

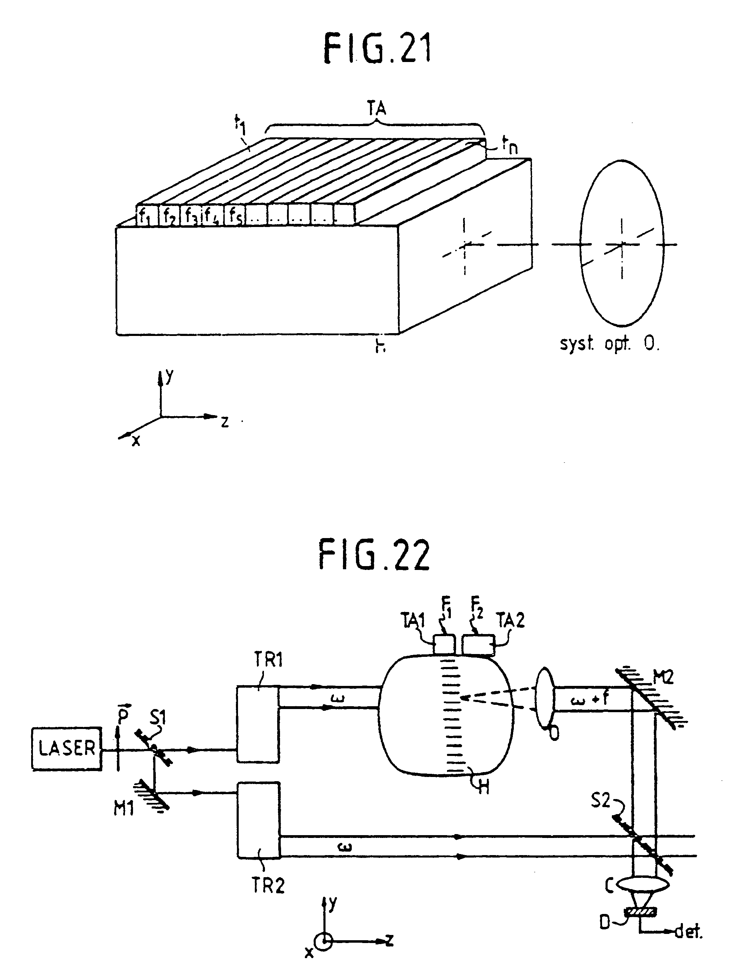

La figure 19 représente le spectre de fréquence en sortie de CD3.

La figure 20 fournit une variante de réalisation des circuits de la figure 10.

Cette variante apporte une amélioration à la chaîne de détection par réduction de la bande passante.

Pour cela une ligne à retard CD5 suivie d'une porte logique CD6 commandée par un signal de fréquence $f + \delta f$ sont intercalées entre le circuit de redressement CD2 et de circuit d'intégration CD3. L'intercorrélation permet une intégration qui fournit un signal de fréquence $\delta f$ nettement inférieur à la fréquence f.

Selon une variante de réalisation du système de la figure 9, si les faisceaux collimatés issus de O et B ont un diamètre comparable à celui du détecteur D il est possible de supprimer le système optique C. Le détecteur est alors exposé à deux ondes planes superposées.

En se reportant à la figure 21, on va maintenant décrire une variante de réalisation des tranducteurs.

Il est possible en effet de marquer en fréquence tous les photons diffusés dans l'organe H et aussi de supprimer les translation des transducteurs nécessaires à la formation de l'image. La figure 21 décrit un tel système. Le transducteur, TA comporte plusieurs sondes acoustiques t1 à tn. Chaque sonde acoustique est excitée à une fréquence différente de ses voisines. Un photon diffusé sous le transducteur $T_i$, vibrant à $f_i$, est associé à une onde optique de fréquence $\omega + f_i$ et donne donc un photocourant à la fréquence $f_i$. A chaque abscisse selon l'axe Z, il est ainsi possible d'associer une fréquence $f_i$. Il suffit, lorsque la mise au point du système optique O passe de $Z_i$ à $Z_{i+1}$, de changer la fréquence centrale du filtre CD1 qui est connecté au détecteur D, de $f_i$ à $f_{i+1}$.

Les photons susceptibles d'être diffusés, sous un transducteur TAi, pour donner un photocourant à la fréquence $f_i$, sont ceux qui sont parvenus à l'abscisse $Z_i$ sans être diffusés. Ils sont toujours associés à la fréquence optique $\omega$. Les photons qui participent à la formation de l'image du plan d'abscisse $Z_i$ sont ceux qui, diffusés à cette abscisse, sortent du milieu diffusant sans être à nouveau diffusés.

Aux photons multidiffusés sont associés des fréquences optiques du type $\omega + f_i + f_{i+1} + \ldots$ Il suffit donc, pour différencier parfaitement les abscisses $Z_i$, de ne disposer que de filtres aux fréquences $f_i$, qui ne laissent pas passer les fréquences résultant de la somme de plusieurs fréquences $f_i$.

Le mode de réalisation des transducteurs représenté en figure 21, peut être adapté aux différentes variantes de réalisation de l'invention qui vont être maintenant décrites.

Selon une variante de réalisation non représentée de la figure 9, ce faisceau collimaté, fourni par l'optique A, a un diamètre suffisamment important pour couvrir la totalité de la zone dont on veut former l'image. Le système d'éclairage fibre et optique A de la zone ainsi que l'optique O n'ont plus besoin d'être translatés. Une éventuelle non uniformité d'éclairage de la zone peut être prise en compte par une première "lecture" faiblement rendue de la tranche acoustique à imager.

Selon une autre variante de réalisation, de l'invention, les trajets optiques ne sont plus effectués dans des fibres. Celles-ci sont remplacées par des systèmes de translation C1 et C2 des faisceaux représentés en figure 22.

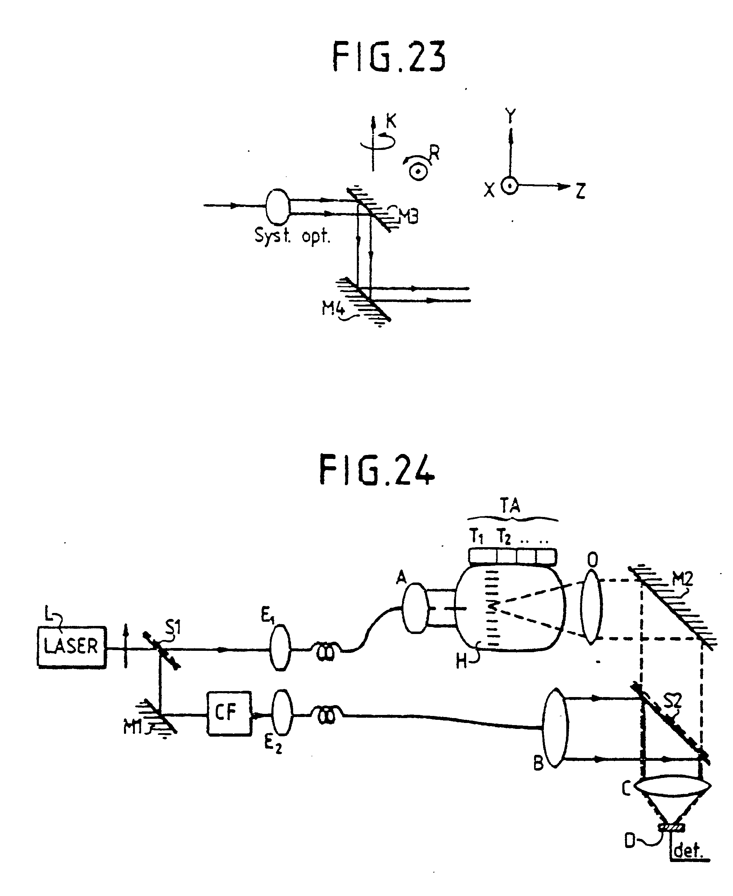

Les systèmes C1 et C2 assurent les translations selon les axes X et Y et la mise en forme des faisceaux d'éclairage F1 et oscillateur local F'1. Ces systèmes C1 et C2 sont, par exemple, des systèmes à deux miroirs M3 et M4 tournant constamment parallèles tel que cela est représenté en figure 23. Le mouvement d'ensemble des deux miroirs est, une rotation autour d'un axe R ce qui fournit une translation selon l'axe X soit une rotation autour d'un axe K, ce qui fournit une translation selon l'axe Y.

Les déplacements des systèmes TR1 et TR2 sont synchronisés sur ceux de l'ensemble (O, M2, S2, C, D), de manière à maintenir la coïncidence du signal et de l'oscillateur local.

Les systèmes TR1 et TR2 peuvent être réalisés différemment avec des prismes par exemple.

La figure 24, représente un système d'imagerie comportant un moyen de détection hétérodyne. Ce moyen comporte un séparateur de faisceau S1 séparant le faisceau fourni par la source L en deux faisceaux F1 et F'1. Le faisceau F'1 est réfléchi par un miroir M1 vers un changeur de fréquence CF qui fournit en échange un faisceau F3 de fréquence $\omega + f$. Le faisceau F3 est transmis au coupleur S2 qui combine les faisceaux F2 et F3 vers le détecteur D. On effectue ainsi, comme cela a été décrit en relation avec la figure 1, un mélange de deux ondes optiques F2 et F3 de fréquences différentes sur le détecteur D.

Pour ne pas prendre en compte les photons diffusés dans la tranche acoustique créée par le transducteur T1 et rediffusés ultérieurement, on utilise ainsi les propriétés d'antenne de la détection hétérodyne. Toute lumière diffusée en un autre point que le foyer objet du système optique O n'est pas collimatée dans la direction de l'oscillateur local et ne contribue pas à la composante du photocourant à la fréquence f.

Le système de la figure 24, fonctionne ainsi avec un seul transducteur T1.

Cependant l'emploi de plusieurs transducteurs (T1, T2,..) ou d'un transducteur à fréquences multiples TA tel que représenté sur la figure 24 peut s'accompagner de l'utilisation d'un système CF capable de déplacer la fréquence de l'oscillateur local.

Lorsque l'optique O analyse la tranche acoustique située sous un transducteur $t_i$, on génère en sortie une onde optique de fréquence $\omega + f_i + \delta f$. Ainsi le photocourant observé n'a plus de fréquence différente selon l'abscisse prise en compte mais possède toujours la fréquence $\delta f = (\omega + f_i + \delta f) - (\omega + f_i)$.

La chaîne de détection de la figure 10 a ainsi une bande passante étroite ; le filtre et l'amplificateur CD1 sont optimisés par une seule fréquence. le système CF de déplacement en fréquence peut être de différents types, par exemple :

— modulateur acoustooptique piloté par une tension continue (cellule de Bragg) ;

— miroir M1 monté sur un matériau piézoélectrique, attaqué par une tension en dent de scie ;

— lame demi-onde en rotation entre deux lames quart d'onde.

La première solution nécessite un asservissement en position de l'acoustooptique. En effet lorsque la fréquence acoustique d'excitation change, il est nécessaire de modifier l'incidence d'entrée du faisceau sur le système CF, pour conserver un bon rendement de diffraction.

La seconde solution est moins complexe mais elle fournit difficilement les fréquences nécessaires à un bon accord entre signal et oscillateur local. Seules les ondes acoustiques de fréquence 2 à 7 MHz traversent sans trop d'absorption les milieux biologiques.

La troisième solution n'autorise un fonctionnement que monochromatique.

Dans l'application médicale du système, la première solution s'impose.

Pour d'autres milieux diffusants, ne nécessitant pas des fréquences de l'ordre de MHz, les deux autres conviennent.

Ces remarques restent valables pour le dispositif MA utilisé dans le système décrit ci-après.

Dans les différentes formes de réalisation décrites précédemment, les faisceaux issus des dispositifs optiques O et B peuvent ne pas être collimatés. Les ondes signal et oscillateur local ne sont pas alors obligatoirement planes mais doivent présenter les mêmes caractéristiques géométriques.

De même, on peut envisager que les systèmes optiques sont de façon classique de forme circulaire, mais ils peuvent aussi être de forme cylindrique. Ainsi, les systèmes optiques O, B et C sont alors cylindriques, les génératrices des cylindres étant parallèles à la direction du transducteur TA1. On supprime ainsi la translation du système selon l'axe X. Le système C forme une ligne lumineuse dont l'analyse, par un détecteur se déplaçant parallèlement aux génératrices permet la formation d'une ligne de l'image du plan fictif $P_o$ découpé par TA1. Le détecteur en translation peut être remplacé par une ligne de détecteurs (barrette de photodiode parallèle aux génératrices, chaque détecteur étant lu à tour de rôle.

Le système de l'invention prévoit également d'utiliser un miroir conjugué.

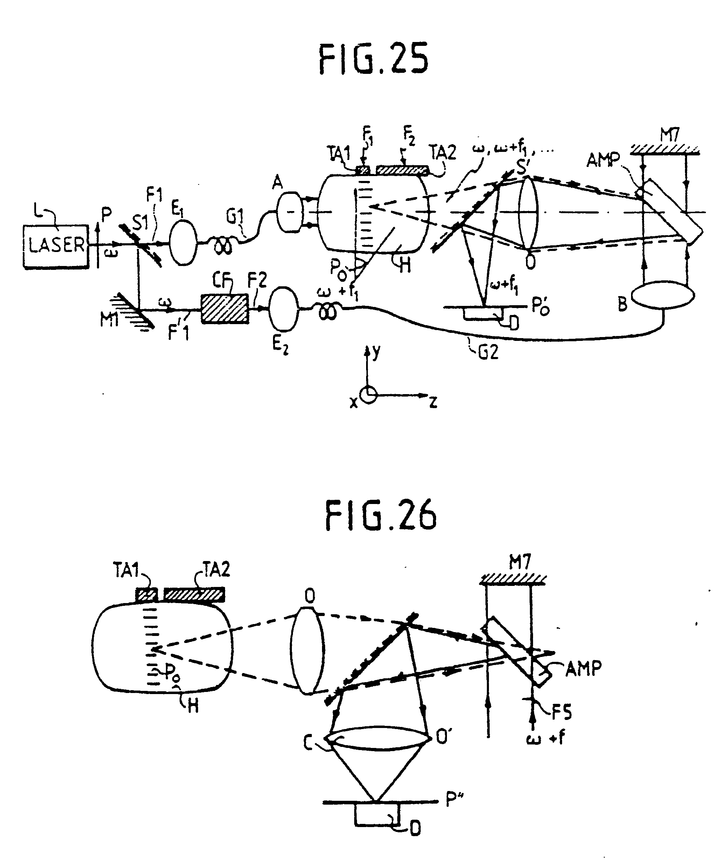

Le système représenté en figure 25 permet la formation sur un plan $P'_o$, de l'image d'un plan $P_o$ défini, par le transducteur TA1.

On retrouve sur la figure 25, les mêmes éléments portant les mêmes références que dans les systèmes décrits précédemment.

Le transducteur TA1, excité par un signal de fréquence f1, fournit une onde acoustique de fréquence f1. Le changeur de fréquence CF, à partir d'un signal optique de fréquence $\omega$, fournit un signal de fréquence $\omega + $ f1 au dispositif AMP.

Le plan $P'_o$ tient lieu de détecteur D et l'image P' reçue et mémorisée soit :
— directement sur un film contenu dans le plan $P'_o$ et développé ultérieurement ;
— par balayage du plan P', par un détecteur ponctuel en translation selon les axes X et Z ;
— par balayage selon l'axe X, d'un détecteur multiple linéaire (barrette de photodiodes par exemple) ou d'un détecteur matriciel arrangé selon les axes X et Z et en translation selon ces axes ;
— directement par un système de détection de grandes dimensions, de type CCD ou Vidicon, par exemple (caméra vidéo).

Le dispositif P est un polariseur rectiligne qui détermine la polarisation éventuelle de la source laser.

S est un système séparateur de faisceau, non polarisant. Suivant la densité de puissance nécessaire à l'éclairage, la transmission de S pourra être choisie entre 50 et 90% (réflexion, complémentaire à 100%).

Les dispositifs $E_1$ et $E_2$ sont des systèmes optiques qui adaptent les caractéristiques géométriques du faisceau laser à celle des fibres optiques G1 et G2 utilisées.

Le système changeur de fréquence CF est un système qui translate la fréquence du faisceau F'1 de $\omega$ à $\omega + $ f1. Ce peut être, par exemple, un modulateur acoustooptique piloté par un courant continu. Le miroir M1 peut être asservi en position pour que le faisceau en sortie de CF ait une intensité maximale. Ce déplacement en fréquence peut également être obtenu directement sur M1, si ce dernier est collé sur un matériau piézoélectrique excité par une dent de scie ou par un système de lames quart d'onde et demi onde en rotation.

Les dispositifs optiques A et B sont des systèmes optiques qui s'adaptent en sortie de fibres et qui fournissent des faisceaux collimatés. Le faisceau d'éclairage, issu de A, est de dimensions comparables à celles de l'image qu'on veut former.

Pour des objets diffusants de grandes dimensions, on ne peut pas toujours former l'image de la totalité du plan P. On reconstitue alors cette image par juxtaposition de clichés successifs obtenus par déplacements simultanés selon les axes x et y de A et de l'ensemble (S', O, AMP, M7, B).

Les différents plans P, internes au milieu diffusant, sont imagés par translations simultanées, selon l'axe Z, de TA1, TA2 et de O. Un déplacement de P' selon l'axe y est alors nécessaire pour retrouver la bonne mise au point.

L'onde issue de O est faiblement focalisée sur le dispositif d'amplification optique AMP pour ne pas y former un réseau de pas trop faible — (plus petit que la fréquence spatiale permise par le matériau).

Les transducteurs TA1 et TA2, sont, comme dans le système précédemment décrits, des transducteurs (fréquence de 1 à 10 MHz), par exemple de type sondes acoustiques d'échographie.

L'amplificateur optique AMP est taillé dans un matériau photoréfractif, du type de ceux utilisés en holographie dynamique (BSO, BGO, $BaTIO_3$, GaAs...).

On mesure des photocourants continus en sortie des détecteurs qui effectuent l'analyse point par point de l'image. Les flux lumineux provenant de chaque tranche sont très différents suivant l'abscisse selon l'axe Z. Ils augmentent lorsque l'abscisse selon l'axe Z croît d'où une adaptation nécessaire de la sensibilité et du gain de l'amplificateur suivant le détecteur.

Il est possible, dans certaines conditions bien particulières, de disposer d'un miroir conjugué dont le coefficient de réflexion est supérieur à 1.

Comme cela est décrit dans l'article "Amplified phase conjugate beam reflection by four wave mixing with photorefractive Bi SiO Crystals" de H. RAJBENBACH et JP HUIGNARD publié dans Journal of Optical Soc. of America du 28 Août 1984.

Le système de translation en fréquence CF ne fournit plus alors une onde à la fréquence $\omega + f_1$ mais à $\omega + f_1 + \delta f$ de telle sorte qu'il y ait gain à la réflexion à toutes les variantes suivantes.

Dans l'exemple de réalisation de la figure 25, on peut remplacer les transducteurs TA1 et TA2 par une série de transducteurs $T_1...T_n$, vibrant aux fréquences $f_1,...f_N$. Le système de translation en fréquence CF de la figure 25 doit aussi fournir ces fréquences. Comme on l'a vu lors de la description de la figure 21, un tel dispositif permet la connaissance de l'abscisse de diffusion des photons monodiffusés. Une mise au point de O sur l'abscisse $Z_i$, selon l'axe Z (abscisse marquée par le transducteur $T_i$) ainsi qu'une translation en fréquence fournie par CF de $f_i$ permettent d'obtenir l'image du plan $P_i$. Si le faisceau issu de O et éclairant le dispositif AMP de la figure 25 est collimaté ou très peu focalisé, il n'est pas nécessaire que (M2, AMP, B) accompagne le système optique O au cours de sa translation selon l'axe Z.

Selon une variante de réalisation de ce système représentée en figure 26, on intervertit les systèmes optiques O et S'. Il faut alors ajouter au système une optique O' qui autorise la formation de l'image sur un plan P". Cette optique O' permet, au cours de balayage de O selon Z. de constamment former l'image de P en P", d'abscisse Y fixe. Le système de détection n'a donc plus à se déplacer selon l'axe Y.

Dans le système de figure 25, on peut prévoir également que les trajets optiques ne soient plus effectués dans des fibres. Celles-ci sont alors remplacées par des systèmes de translation de faisceaux tels que décrits en relation avec les figures 22 et 23.

Dans différentes formes de réalisation décrites précédemment, les déplacements des sondes acoustiques TA1, par exemple, et des optiques sont simultanés. Ils peuvent être cependant décorrélés. C'est alors le médecin qui manipule les sondes acoustiques et qui peut ainsi déterminer, en partie, la position de la coupe observée optiquement. Cette manipulation, a priori, permet de choisir la zone d'examen, celle-ci étant analysée, ensuite, automatiquement.

On peut utiliser d'autres émetteurs ultrasonores que les monosondes proposées dans ce qui précède. Les sondes à balayage de secteur permettent, par exemple, de combiner les balayages optiques et acoustiques de la zone à imager.

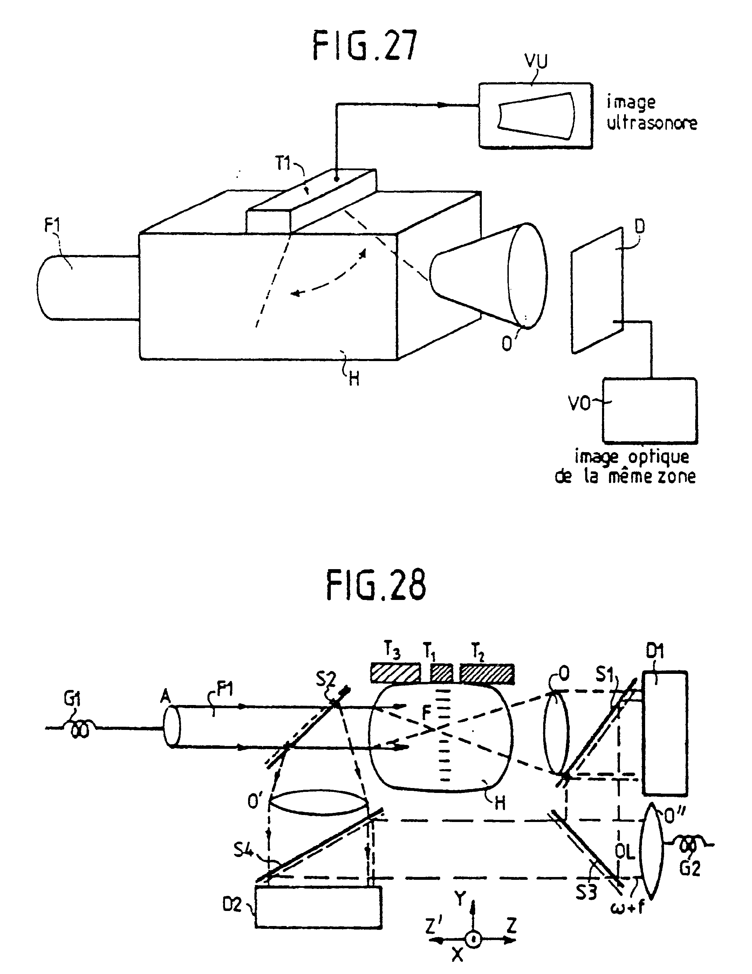

L'utilisation de sondes d'échographie, comme transducteur rend possible l'obtention de deux images, l'une optique (transillumination), l'autre acoustique (échographie). La seconde permet, par exemple, de choisir la zone dont on veut l'image optique comme cela est représenté en figure 27. Sur cette figure on voit l'image ultrasonore obtenue par la sonde T1 dans le milieu H et affichée sur un dispositif de visualisation VU connecté à la sonde T1. Le détecteur D permet d'obtenir une image optique de la même zone et affichée sur un autre dispositif de visualisation VO connectée au détecteur D.

Un tel procédé de double imagerie présente un intérêt clinique certain. En effet, les mêmes homogénéités ne présentent pas le même contraste dans les deux images, suivant la longueur d'onde d'investigation, acoustique ou optique.

L'échographie n'a qu'une faible résolution mais fournit des images qu'on sait maintenant facilement interpréter. La résolution escomptée de la transillumination est bien meilleure, mais les premières images obtenues ne seront significatives que si elles peuvent être comparées à celles, interprétables, données dans la même zone, par un procédé différent. La complémentarité des deux modes d'imagerie apparaît donc à plusieurs niveaux.

Par analogie avec l'échographie, il peut être intéressant de détecter le signal optique rétrodiffusé. On peut aussi former deux images complémentaires, l'une par transmission, l'autre par rétrodiffusion.

En effet il a été observé que dans un milieu biologique, un élément diffusant diffuse la lumière qu'il reçoit dans toutes les directions. Notamment, un élément diffusant contenu au point F du milieu H de la figure 28 diffuse, comme on l'a vu précédemment, selon la direction Z, mais diffuse la lumière également selon la direction Z'.

Selon un autre exemple de réalisation selon l'invention de la figure 28 prévoit d'interposer entre la source L et le corps H, sur le trajet du faisceau F1 illuminant le corps H, une lame semi-réfléchissante S2.

Une lentille O, dont le foyer objet est situé au point F, reçoit la lumière diffusée par le point F et transmet cette lumière vers un premier détecteur D1. Cette disposition a été décrite précédemment.

Une lentille O' reçoit la lumière rétrodiffusée par le point F et réfléchie par la lame semi-réfléchissente S2. L'image du foyer objet de la lentille O' à travers le miroir semi-réfléchissant S2 est placé également au point F. La lumière rétrodiffusée est transmise par la lentille O' à un deuxième détecteur D2. Le signal rétrodiffusé est donc analysé de manière tout à fait analogue à l'onde diffusée. Les deux détecteurs D1 et D2 détectent, donc tous les deux, le point diffusant F. En additionnant par des moyens non représentés les résultats de détection des deux détecteurs D1 et D2 on obtient ainsi une plus grande sensibilité de détection.

Le système de la figure 28 peut fonctionner avec un seul transducteur T1 de façon analogue au système de la figure 3. Il peut également fonctionner avec les transducteurs T2 et T3 encadrant le transducteur T1.

Les transducteurs $T_2$ et $T_3$, délivrant une fréquence différente de celle de $T_1$, permettent de ne prendre en compte que les photons diffusés en F et qui sortent du milieu sans nouvelle diffusion.

Le système de la figure 28 peut donner lieu à différentes variantes de réalisation en lui combinant différentes dispositions précédemment décrites. L'intensité des flux diffusés et rétrodiffusés, depuis F, est mesurée, par une détection hétérodyne. Ces flux sont superposés à un oscillateur local avant d'être détectés sur D1 et D2 (voir figure 28).

Il est bien évident que la description qui précède n'a été faite qu'à titre d'exemple non limitatif. D'autres variantes peuvent être envisagées sans sortir du cadre de l'invention. Notamment, différentes dispositions décrites précédemment peuvent être combinées entre elles.

**Revendications**

1. Procédé d'imagerie de corps biologiques par transillumination selon lequel on éclaire par transparence à l'aide d'un premier faisceau lumineux (F1) un milieu (H) contenant au moins une zone diffusante, on mesure la quantité de lumière diffusée par ladite zone diffusante, et dans lequel on transmet, dans le milieu (H), une première onde acoustique d'une première fréquence (f1) interférant avec ledit premier faisceau lumineux (F1) et on détecte la lumière traversant le milieu (H) et ayant sa fréquence déplacée de la valeur de la première fréquence (f$_1$), caractérisé en ce qu'on transmet dans le milieu (H), une deuxième onde acoustique d'une deuxième fréquence (f2) différente de la première fréquence, interférant avec ledit premier faisceau lumineux (F1) après que celui-ci ait interféré avec la première onde acoustique, et qu'on ne détecte que la lumière ayant subi une translation de la première fréquence (f1).

2. Procédé d'imagerie de corps biologiques par transillumination selon lequel on éclaire par transparence à l'aide d'un premier faisceau lumineux (F1) un milieu (H) contenant au moins une zone diffusante, on mesure la quantité de lumière diffusée par ladite zone diffusante, et dans lequel on transmet, dans le milieu (H), une première onde acoustique d'une première fréquence (f1) interférant avec ledit premier faisceau lumineux (F1) et on détecte la lumière traversant le milieu (H) et ayant sa fréquence déplacée de la valeur de la première fréquence (f$_1$), caractérisé en ce qu'on transmet dans le milieu (H) plusieurs premières ondes acoustiques de fréquences différentes (f1, f2, f$_i$) interférant chacune indépendamment avec le premier faisceau lumineux (F1) et qu'on détecte successivement la lumière ayant subi des translations de chacune desdites fréquences (f1, f2, f$_i$).

3. Procédé d'imagerie selon la revendication 1, caractérisé en ce qu'on met en coïncidence, sur le détecteur (D), la lumière ayant traversé le milieu (H) et un faisceau lumineux de fréquence légèrement décalée par rapport à la fréquence du premier faisceau lumineux.

4. Système d'imagerie par transillumination selon la revendication 1, comprenant une source laser (L) émettant un faisceau lumineux de source (FS) éclairant à l'aide d'un premier faisceau (F1) un milieu transparent ou translucide (H) un détecteur (D) recevant un deuxième faisceau lumineux (F2) résultant du premier faisceau (F1) après traversée dudit milieu (H), un premier transducteur acoustique (TA1) émettant dans le corps (H) une onde acoustique d'une première fréquence déterminée (f1) non colinéaire avec le premier faisceau (F1) ainsi qu'un dispositif optique de collimation (O) placé sur le trajet du deuxième faisceau (F2) et dont le foyer objet (F) est situé à l'intersection du deuxième faisceau (F2) et de l'onde acoustique, des moyens de filtrage en fréquence étant en outre associés au système d'imagerie pour détecter par le détecteur (D) la lumière du deuxième faisceau lumineux (F2) ayant subi une translation de la valeur de la première fréquence (f), caractérisé en ce qu'il comporte un deuxième transducteur acoustique (TA2) accolé au premier transducteur (TA1) placé du côté opposé au premier faisceau lumineux (F1) par rapport au premier transducteur (TA1) et permettant d'émettre une deuxième onde acoustique d'une deuxième fréquence déterminée (f2) interférant avec le premier faisceau lumineux (F1) mais n'interférant pas avec la première onde acoustique et irradiant l'ensemble du milieu (H) situé du côté opposé au premier faisceau lumineux (F1) par rapport à la première onde acoustique.

5. Système d'imagerie par transillumination selon la revendication 1, comprenant une source laser (L) émettant un faisceau lumineux de source (FS) éclairant à l'aide d'un premier faisceau (F1) un milieu transparent ou translucide (H) un détecteur (D) recevant un deuxième faisceau lumineux (F2) résultant d'un premier faisceau (F1) après traversée dudit milieu (H), un premier transducteur acoustique (TA1) émettant dans le corps (H) une onde acoustique d'une première fréquence déterminée (f1) non colinéaire avec le premier faisceau (F1) ainsi qu'un dispositif optique de collimation (O) placé sur le trajet du deuxième faisceau (F2) et dont le foyer objet (F) est situé à l'intersection du deuxième faisceau (F2) et de l'onde acoustique, des moyens de filtrage en fréquence étant en outre associés au système d'imagerie pour détecter par le détecteur (D) la lumière du deuxième faisceau lumineux (F2) ayant subi une translation de la valeur de la première fréquence (f), caractérisé en ce que le premier transducteur (TA) comporte plusieurs sondes acoustiques accolées les unes aux autres émettant chacune une onde acoustique d'une fréquence déterminée (f1, f2,...f$_i$).

6. Système d'imagerie, selon la revendication 4, caractérisé en ce qu'il comporte un séparateur de faisceau placé sur le trajet du faisceau de source (FS) séparant celui-ci de façon à fournir ledit premier faisceau lumineux (F1) et une portion de faisceau (F'1) donnant lieu à un troisième faisceau (F3), un coupleur de faisceau retransmettant, au détecteur (D), ce troisième faisceau (F3) et le deuxième faisceau (F2) issu du milieu (H).

7. Système d'imagerie, selon la revendication 6, caractérisé en ce qu'il comporte un dispositif de décalement de fréquence (CF) placé sur le trajet de ladite portion de faisceau (F'1) et donnant lieu au troisième faisceau (F3) dont la fréquence est légèrement décalée par rapport à la fréquence du premier faisceau (F1).

8. Système d'imagerie, selon la revendication 4, caractérisé en ce que le dispositif de décalement de fréquence (CF) est un système acousto-optique.

9. Système d'imagerie, selon la revendication 4, caractérisé en ce que le dispositif de décalement de fréquence (CF) comporte un miroir (M2) monté sur un dispositif piézoélectrique.

10. Système d'imagerie, selon la revendication 4, caractérisé en ce qu'il comporte des moyens de déplacements du milieu (H) par rapport aux dispositifs optiques transmettant les premier, deuxième et troisième faisceaux lumineux (F1, F2, F3).

11. Système d'imagerie, selon la revendication 10, caractérisé en ce que les moyens de déplacement comporte des guides d'ondes permettant de transmettre les premier et troisième faisceaux lumineux (F1, F3).

12. Système d'imagerie, selon la revendication 11, caractérisé en ce que les guides d'ondes sont des fibres optiques.

13. Système d'imagerie, selon la revendication 10, caractérisé en ce qu'il comporte sur le trajet du premier faisceau (F1) un dispositif translateur de faisceau (TR1) permettant de décaler la direction de transmission du premier faisceau parallèlement à une direction déterminée.

14. Système d'imagerie, selon la revendication 10, caractérisé en ce qu'il comporte sur le trajet de ladite portion de faisceau (F'1) un dispositif translateur de faisceau (TR2) permettant de décaler la direction de transmission de cette portion de faisceau parallèlement à une direction déterminée.

15. Système d'imagerie, selon l'une des revendications 13 ou 14, caractérisé en ce que chaque dispositif translateur de faisceau (TR1, TR2) comporte deux dispositifs de réflexion à surfaces réfléchissantes parallèles entre elles et mobiles en rotation.

16. Système d'imagerie, selon l'une des revendications 13 ou 14, caractérisé en ce que chaque dispositif translateur de faisceau (TR1, TR2) comporte deux dispositifs de réflexion à surfaces réfléchissantes parallèles entre-elles et mobiles en translation.

17. Système d'imagerie selon la revendication 4, caractérisé en ce qu'il comporte un dispositif de filtrage holographique placé sur le trajet du deuxième faisceau ainsi qu'un moyen d'application à ce dispositif d'un faisceau pompe dont la fréquence est celle du premier faisceau lumineux ($\omega$) augmenté de la fréquence de l'onde acoustique (f1).

18. Système d'imagerie, selon la revendication 17, caractérisé en ce que le dispositif de filtrage (AMP) agit en réflexion et que le système comporte un séparateur de faisceau (S') placé entre le dispositif de filtrage (AMP) et le milieu (H) pour renvoyer l'image filtrée du milieu (H) vers le détecteur (D).

19. Système d'imagerie selon la revendication 4, caractérisé en ce qu'il comporte un polariseur (P) placé sur le trajet du faisceau lumineux de source (FS) et polarisant ce faisceau rectilignement.

20. Système d'imagerie selon la revendication 4, caractérisé en ce que le détecteur (D) est une photodiode.

21. Système d'imagerie selon la revendication 4, caractérisé en ce que le détecteur (D) comporte une série de détecteurs alignés.

22. Système d'imagerie selon la revendication 4, caractérisé en ce que le détecteur (D) comporte une matrice de détecteurs.

23. Système d'imagerie selon la revendication 4, caractérisé en ce qu'il comporte un dispositif d'affichage d'une image d'une zone du milieu (H), fournie par le premier transducteur acoustique (TA1), le détecteur (D) permettant par ailleurs un affichage d'une image optique de la même zone.

24. Système d'imagerie selon la revendication 4, caractérisé en ce qu'il comporte en outre : sur le trajet du premier faisceau lumineux (F2) un dispositif optique semi-réfléchissant (S2) vers le milieu (H) et réfléchissant la lumière provenant du milieu (H) ;
— un autre dispositif O' de collimation dont le foyer objet réfléchi par le dispositif optique semi-réfléchissant (S2) est situé audit point (F) et recevant la lumière réfléchie par le dispositif optique semi-réfléchissant ;
— un deuxième détecteur (D2) placé sur le trajet de la lumière retransmise par le dispositif optique semi-réfléchissant (S2) et le dispositif optique (O').

**Patentansprüche**

1. Verfahren zur Abbildung biologischer Körper mittels Durchstrahlung, bei welchem ein wenigstens eine streuende Zone umfassendes Medium (H) mittels eines ersten Lichtbündels (F1) durch Transparenz erleuchtet wird, die Menge des von dieser streuenden Zone gestreuten Lichtes gemessen wird und eine erste Schallwelle einer ersten Frequenz (f1), welche mit dem ersten Lichtbündel (F1) interferiert, in dem Medium (H) übertragen wird sowie das das Medium (H) durchquerende Licht erfaßt wird, dessen Frequenz um den Wert der ersten Frequenz (f₁) verschoben wird, dadurch gekennzeichnet, daß in dem Medium (H) eine zweite Schallwelle einer sich von der ersten Frequenz unterscheidenden zweiten Frequenz (f2) übertragen wird, die mit dem genannten ersten Lichtbündel (F1) interferiert, nachdem dieses mit der ersten Schallwelle interferiert hat, und daß nur das Licht, das um die erste Frequenz (f1) versetzt wurde, erfaßt wird.

2. Verfahren zur Abbildung biologischer Körper mittels Durchstrahlung, bei welchem ein wenigstens eine streuende Zone enthaltendes Medium (H) mittels eines ersten Lichtbündels (F1) erleuchtet wird, die Menge des von dieser streuenden Zone gestreuten Lichtes gemessen wird und eine erste Schallwelle einer ersten Frequenz (f1) in dem Medium (H) übertragen wird, die mit dem genannten ersten Lichtbündel (F1) interferiert, und das das Medium (H) durchquerende Licht erfaßt wird, dessen Frequenz um den Wert der ersten Frequenz (f₁) verschoben wird, dadurch gekennzeichnet, daß in dem Medium (H) mehrere erste Schallwellen verschiedener Frequenzen (f1, f2, fᵢ) übertragen werden, wovon jede unabhängig mit dem ersten Lichtbündel (F1) interferiert, und daß nacheinander das Licht, das jeweils um eine der genannten Frequenzen (f1, f2, fᵢ) versetzt wurde, erfaßt wird.

3. Verfahren zur Abbildung nach Anspruch 1, dadurch gekennzeichnet, daß man auf dem Detektor (D) das Licht, das das Medium (H) durchquert hat, mit einem Lichtbündel, dessen Frequenz in Bezug auf die Frequenz des ersten Lichtbündels etwas verschoben ist, in Koinzidenz bringt

4. Verfahren zur Abbildung mittels Durchstrahlung nach Anspruch 1, mit einer Laserquelle (L), welche ein Quellen-Lichtbündel (FS) ausstrahlt, das mittels eines ersten Bündels (F1) ein transparentes bzw. durchscheinendes Medium (H) beleuchtet, mit einem Detektor (D), der ein zweites Lichtbündel (F2) empfängt, das aus dem ersten Lichtbündel (F1) nach Durchqueren des genannten Mediums (H) stammt, einem ersten Schallwandler (TA1), der in dem Körper (H) eine Schallwelle einer ersten, bestimmten Frequenz (f1) überträgt, die mit dem ersten Bündel (F1) nicht kollinear ist, sowie mit einer optischen Kollimiervorrichtung (O), die auf dem Weg des zweiten Bündels (F2) angeordnet ist und dessen Objekt-Fokus (F) am Schnittpunkt des zweiten Bündels (F2) und der Schallwelle liegt, wobei Frequenz-Filter- Mittel ferner dem Abbildungssystem zugeordnet sind, um über den Detektor (D) das Licht des zweiten Lichtbündels (F2), das um den Wert der ersten Frequenz (f) versetzt wurde, zu erfassen, dadurch gekennzeichnet, daß es einen zweiten, mit dem ersten Wandler (TA1) verbundenen Wandler (TA2) umfaßt, der auf der dem ersten Lichtbündel (F1) abgewandten Seite in Bezug auf den ersten Wandler (TA1) angeordnet ist und das Aussenden einer zweiten Schallwelle einer zweiten bestimmten Frequenz (f2) ermöglicht, die mit dem ersten Lichtbündel (F1), aber nicht mit der zweiten Schallwelle interferiert, und das gesamte Medium (H), das auf der dem ersten Lichtbündel (F1) in Bezug auf die erste Schallwelle abgewandten Seite angeordnet ist, belichtet.

5. System zur Abbildung mittels Durchstrahlung nach Anspruch 1, mit einer Laserquelle (L), die ein Quellen-Lichtbündel (FS) aussendet, das mittels eines ersten Bündels (F1) ein transparentes bzw. durchscheinendes Medium (H) erleuchtet, mit einem Detektor (D), der ein zweites Lichtbündel (F2) empfängt, das nach Durchqueren dieses Mediums (H) aus dem ersten Bündel (F1) stammt, mit einem ersten Schallwandler (TA1), der in dem Körper (H) eine erste Schallwelle einer ersten bestimmten Frequenz (f1) aussendet, die mit dem ersten Bündel (F1) nicht kollinear ist, sowie mit einer optischen Kollimiervorrichtung (O), die auf dem Weg des zweiten Bündels (f2) angeordnet ist und deren Objekt-Fokus (F) am Schnittpunkt des zweiten Bündels (F2) mit der Schallwelle liegt, wobei Frequenz-Filtermittel ferner dem Abbildungssystem zugeordnet sind, um durch den Detektor (D) das Licht des zweiten Lichtbündels (F2) zu erfassen, das um den Wert der ersten Frequenz (f) versetzt wurde, dadurch gekennzeichnet, daß der erste Wandler (TA) mehrere, miteinander verbundene Schallsonden, wovon jede eine Schallwelle einer bestimmten Frequenz (f1, f2,..., fᵢ) abgibt, umfaßt.

6. Abbildungssystem nach Anspruch 4, dadurch gekennzeichnet, daß es einen Bündelteiler umfaßt, der auf dem Weg des Quellen-Bündels (FS) angeordnet ist und dieses aufteilt, so daß er das genannte erste Lichtbündel (F1) sowie einen Bündelteil (F'1) liefert, der ein drittes Bündel (F3) ergibt, wobei ein Bündelkoppler dem Detektor (D) dieses dritte Bündel (F3) und das zweite, aus dem Medium (H) stammende Bündel (F2) erneut zuführt.

7. Abbildungssystem nach Anspruch 6, dadurch gekennzeichnet, daß es eine Vorrichtung zur Verschiebung der Frequenz (CF) umfaßt, die auf dem Weg des genannten Bündelteils (F'1) angeordnet ist und das dritte Bündel (f3) abgibt, dessen Frequenz in Bezug auf die Frequenz des ersten Bündels (F1) etwas verschoben ist.

8. Abbildungssystem nach Anspruch 4, dadurch gekennzeichnet, daß die Vorrichtung zur Verschiebung der Frequenz (CF) ein opto-akustisches System ist.

9. Abbildungssystem nach Anspruch 4, dadurch gekennzeichnet, daß die Vorrichtung zur Frequenz-Verschiebung (CF) einen auf einer piezoelektrischen Vorrichtung montierten Spiegel (M2) umfaßt.

10. Abbildungssystem nach Anspruch 4, dadurch gekennzeichnet, daß es Mittel zur Verschiebung des Mediums (H) in Bezug auf die optischen Vorrichtungen, die das erste, das zweite sowie das dritte Lichtbündel (F1, F2, F3) übertragen, umfaßt.

11. Abbildungssystem nach Anspruch 10, dadurch gekennzeichnet, daß die Verschiebemittel Wellenleiter, die die Übertragung des ersten Lichtbündels (F1) sowie des dritten Lichtbündels (F3) ermöglichen, umfassen.

12. Abbildungssystem nach Anspruch 11, dadurch gekennzeichnet, daß die Wellenleiter optische Fasern sind.

13. Abbildungssystem nach Anspruch 10, dadurch gekennzeichnet, daß es auf dem Weg des ersten Bündels (F1) eine Vorrichtung zum Übertragen des Bündels (TRI), die die Verschiebung der Übertragungsrichtung dieses Bündelteils parallel zu einer bestimmten Richtung ermöglicht, umfaßt.

14. Abbildungssystem nach Anspruch 10, dadurch gekennzeichnet, daß es auf dem Weg des genannten Bündelteils (F'1) eine vorrichtung zur Übertragung des Bündels (TR2), die die Übertragungsrichtung dieses Bündelteils parallel zu einer bestimmten Richtung ermöglicht, umfaßt.

15. Abbildungssystem nach Anspruch 13 oder 14, dadurch gekennzeichnet, daß jede Vorrichtung zum Übertragen des Bündels (TR1, TR2) zwei drehbewegliche und zueinander parallele Reflexionsvorrichtungen mit Reflexionsflächen umfaßt.

16. Abbildungssystem nach Anspruch 13 oder 14, dadurch gekennzeichnet, daß jede Vorrichtung zum Übertragen des Bündels (RR1, TR2) zwei drehbewegliche und zueinander parallele Reflexionsvorrichtungen mit Reflexionsflächen umfaßt.

17. Abbildungssystem nach Anspruch 4, dadurch gekennzeichnet, daß es eine Holographie-Filtervorrichtung, die auf dem Weg des zweiten Bündels angeordnet ist, und ein Mittel zur Anwendung eines Pumpbündels an dieser Vorrichtung umfaßt, dessen Frequenz derjenigen des ersten Lichtbündels (x), erhöht um die Frequenz (f1) der Schallwelle, entspricht.

18. Abbildungssystem nach Anspruch 17, dadurch gekennzeichnet, daß die Filtervorrichtung (AMP) reflektierend wirkt und daß das System einen Bündelteiler (S') umfaßt, der zwischen der Filter-Vorrichtung (AMP) und dem Medium (H) angeordnet ist, um das gefilterte Bild vom Medium (H) zum Detektor (D) hin zurückzusenden.

19. Abbildungssystem nach Anspruch 4 dadurch gekennzeichnet, daß es einen Polarisator (P), der auf dem Wege des Lichtbündels der Quelle (FS) angeordnet ist und dieses Bündel linear polarisiert, umfaßt.

20. Abbildungssystem nach Anspruch 4, dadurch gekennzeichnet, daß der Detektor (D) eine Photodiode ist.

21. Abbildungssystem nach Anspruch 4, dadurch gekennzeichnet, daß der Detektor (D) eine Reihe von ausgerichteten Detektoren umfaßt.

22. Abbildungssystem nach Anspruch 4, dadurch gekennzeichnet, daß der Detektor (D) eine Detektoren-Matrix umfaßt.

23. Abbildungssystem nach Anspruch 4, dadurch gekennzeichnet, daß es eine Vorrichtung zur Anzeige eines Bildes einer Zone des Mediums (H) umfaßt, das von dem ersten Schallwandler (TA1) geliefert wird, wobei der Detektor (D) ferner eine Anzeige eines optischen Bildes derselben Zone ermöglicht.

24. Abbildungssystem nach Anspruch 4, dadurch gekennzeichnet, daß es ferner umfaßt : auf dem Wege des ersten Lichtbündels (F2) eine halbreflektierende optische Vorrichtung (S2), welche die Übertragung des ersten Lichtbündels (F2) zu dem Medium (H) ermöglicht und das aus dem Medium (H) stammende Licht reflektiert ;

— eine weitere optische Kollimier-Vorrichtung O', deren Objekt-Fokus, der von der halbreflektierenden optischen Vorrichtung (S2) reflektiert wird, auf dem genannten Punkt (F) gelegen ist und die das von der halbreflektierenden optischen Vorrichtung reflektierte Licht empfängt ;

— einen zweiten Detektor (D2), der auf dem Weg des Lichtes angeordnet ist, das von der halbreflektierenden optischen Vorrichtung (S2) und der optischen Vorrichtung (O') übertragen wird.

## Claims

1. A transmission method of forming an image of biological specimens by transmitted light in accordance with which a first light beam (F1) is shone through to illuminate a medium (H) containing at least one diffusing, the quantity of the light diffused by the said diffusing zone is measured and in which a first acoustic wave at a first interfering frequency (f1), which interferes with the said first light beam (F1), is emitted into the diffusing zone, and the light traversing the medium (H) is detected and having its frequency shifted from the value of the first frequency ($f_1$), characterized in that a second acoustic wave, having a second frequency (f2) different to the first frequency, is emitted in the medium interfering with the said first light beam (F1) after the same has interfered with the first acoustic wave and that only that light is detected which has undergone translation from the first frequency (f1).

2. A method of forming an image of biological specimens by transmitted light in accordance with which a first light beam (F1) is shone through to illuminate a medium (H) containing at least one diffusing zone, the quantity of the hight diffused by the said diffusing zone is measured and in which a first acoustic wave at a first interfering frequency (f1), which interferes with the said first light beam (F1), is emitted into the diffusing zone, and the light traversing the medium (H) is detected and having its frequency shifted from the value of the first frequency $(f_1)$, characterized in that a plurality of first acoustic waves ate emitted into the medium (H) having different frequencies (f1, f2 and $f_j$) each independently interfering which first light beam (F1) and in that after having undergone translations of each of the said frequencies (f1, f2 and $f_j$) the light is detected.

3. The method of forming an image as claimed in claim 1, characterized by bringing into coincidence, at the detector (D), the light which has traversed the medium (H) and light beam with a slight frequency shift in relation to the frequency of the first light beam.

4. A transmission image forming system as claimed in claim 1, comprising a laser source (L) emitting a source light beam (FS) employing a first beam (F1) to illuminate a transparent or translucent medium (H), a detector (D) receiving a second light beam (F2) resulting from the first beam (F1) after passage through the medium (H), a first acoustic transductor (TA1) emitting in the specimen (H) an acoustic wave with a first predetermined frequency (f1) not colinear with the first beam (F1) and also an optical collimation device (O) arranged on the path of the second beam (F2) and of which the object focus (F) is positioned at the intersection of the second beam (F2) and thhe acoustic wave, means for frequency filtering being furthermore associated with the image forming system in order to detect with the detector (D) the light of the second light beam (F2) which has undergone a translation from the value of the first frequency (f), characterized in that it comprises a second acoustic transductor (TA2) attached to the first transductor (TA1) arranged on the opposite side to the first light beam (F1) in relation to the first transductor (TA1) and making it possible to emit a second acoustic wave with a second predetermined frequency (f2) interfering with the first light beam (F1) but not interfering with the first acoustic wave and irradiating the arrangement consisting of the medium (H) positioned on the side opposite to the first light beam (F1) in relation to the first acoustic wave.

5. A transmission image forming system as claimed in claim 1, comprising a laser source (L) emitting a source light beam (FS) employing a first beam (F1) to illuminate a transparent or translucent medium (H), a detector (D) receiving a second light beam (F2) resulting from the first beam (F1) after passage through the medium (H), a first acoustic transductor (TA1) emitting into the specimen (H) an acoustic wave with a first predetermined frequency (f1) not colinear with the first beam (F1) and also an optical collimation device (O) arranged on the path of the second beam (F2) and of which the object focus (F) is positioned at the intersection of the second beam (F2) and the acoustic wave, means for frequency filtering being furthermore associated with the image forming system in order to detect with the detector (D) the light of the second light beam (F2) which has undergone a translation from the value of the first frequency (f), characterized in that the first transductor (TA) comprises a plurality of acoustic sensors attached to each other and each emitting a wave with a predetermined frequency (f1, f2...$f_1$).

6. The image forming system as claimed in claim 4, characterized in that it comprises a beam splitter arranged on the path of the source beam (FS) and splitting the same in such a manner as to supply the first light beam (F1) and a beam portion (F'1) producing a third beam (F3), a beam coupler for transmitting back, to the detector (D) this third beam (F3) and the second beam coming (F2) coming from the medium (H).

7. The image forming system as claimed in claim 6, characterized in that it comprises a frequency shit device (CF) arranged on the path of the said beam portion (F'1) and producing the third beam (F3) whose frequency is slightly shifted in relation to the frequency of the first beam (F1).

8. The image forming system as claimed in claim 4, characterized in that the frequency shift device (CF) is an acousto-optic system.

9. The image forming system as claimed in claim 4, characterized in that the frequency shift device (CF) comprises a mirror (M2) arranged on a piezoelectric device.

10. The image forming system as claimed in claim 4, characterized in that it comprises means for moving the medium (H) in relation to the optical devices emitting the first, second and third light beams (F1, F2 and F3).

11. The image forming system as claimed in claim 10, characterized in that the displacing means comprise wave guides making it possible to emit the first and second light beams (F1 and F3).

12 The image forming system as claimed in claim 11, characterized in that the wave guides are optic fibers.

13. The image forming system as claimed in claim 10, characterized in that it comprises, on the path of the first beam (F1), a beam translating device (TR1) making it possible to shift the direction of transmission of the first beam parallel to a predetermined direction.

14. The image forming system as claimed in claim 10, characterized in that on the path of the said beam portion (F'1) it comprises a beam translating device (TR2) making possible a shift in the direction of transmission of this beam portion parallel to a predetermined direction.

15. The image forming system as claimed in claim 13 or to claim 14, characterized in that each beam translating device (TR1 and TR2) comprises two reflection devices whose reflecting surfaces are mutually parallel and able to be moved in rotation.

16. The image forming system as claimed in claim 13 or 14, characterized in that each beam translating device (TR1 and TR2) comprises two reflecting devices whose reflecting surfaces are mutually parallel and are able to be moved in translation.

17. The image forming system as claimed in claim 4, characterized in that it comprises a holographic filtering device arranged on the path of the second beam and also a means for the application to this device of a pumping beam whose frequency is equal to that of the first light beam ($\omega$) increased by the frequency of the acoustic wave (f1).

18. The image forming system as claimed in claim 17, characterized in that the filtering device (AMP) acts reflectively and in that the system comprises a beam splitter (S') arranged between the filtering device (AMP) and the medium (H) in order to return the filtered image of the medium (H) to the detector (D).

19. The image forming system as claimed in claim 4, characterized in that it comprises a polarizer (P) arranged on the path of the source light beam (FS) and polarizing this beam rectangularly.

20. The image forming system as claimed in claim 4, characterized in that the said detector (D) is a photodiode.

21. The image forming system as claimed in claim 4, characterized in that the detector (D) comprises series of detectors in alignment.

22. The image forming system as claimed in claim 4, characterized in that the detector (D) comprises a detector matrix.

23. The image forming system as claimed in claim 4, characterized in that it comprises a display device for an image of a zone of the medium (H), supplied by the first acoustic transductor (TA1), such detector (D) furthermore permitting display of an optical image of the same zone.

24. The image forming system as claimed in claim 4, characterized in that it furthermore comprises, on the path of the first light beam (F2), a semi-reflecting optical device (S2) mating possible the transmission of the first light beam (F2) to the medium (H) and reflecting the light originating from the medium (H),

— a further optical collimation device O' whose focus of the object reflected by the semi-reflecting optical device (S2) is arranged at the said point (F) and it receives the light reflected by the semi-reflecting optical device, and

— a second detector (D2) arranged on the path of the light transmitted back by the semi-reflecting optical device (S2) and the optical device (O').

# FIG.1

# FIG.2

# FIG.3

# FIG.4

FIG.5

FIG.6

composante A(ω) restituée

FIG.7

# FIG.8

# FIG.9

# FIG.10

filtrage autour de f
et amplification

intégration

E , E+f

D   CD1   CD2   CD3   CD4

redressement

filtrage BF

# FIG.20

filtrage à f    ligne à retard    intégration

δf

amplification

signal
monochromatique
à f + δf

## FIG.11

A amplitude du
signal optique

## FIG.12

## FIG.13

## FIG.14

## FIG.15

## FIG.16

## FIG.17

## FIG.18

## FIG.19

# FIG.21

# FIG.22

# FIG.23

# FIG.24

FIG.25

FIG.26

# FIG.27

image
ultrasonore

image optique
de la même zone

# FIG.28